(19) Europäisches Patentamt
European Patent Office
Office européen des brevets

(11) EP 3 287 892 B1

(12) FASCICULE DE BREVET EUROPEEN

(45) Date de publication et mention
de la délivrance du brevet:
**12.12.2018 Bulletin 2018/50**

(51) Int Cl.:
***G06F 7/72*** *(2006.01)*

(21) Numéro de dépôt: **17156309.1**

(22) Date de dépôt: **15.02.2017**

(54) **PROTECTION D'UN CALCUL D'EXPONENTIATION MODULAIRE**

SCHUTZ FÜR DIE BERECHNUNG EINER MODULAREN POTENZIERUNG

PROTECTION OF A MODULAR EXPONENTIATION CALCULATION

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.08.2016 FR 1657861**

(43) Date de publication de la demande:
**28.02.2018 Bulletin 2018/09**

(73) Titulaire: **STMICROELECTRONICS (ROUSSET)
SAS**
**13790 Rousset (FR)**

(72) Inventeurs:
- **DIOP, Ibrahima**
  **13004 Marseille (FR)**
- **LINGE, Yanis**
  **13100 Aix En Provence (FR)**
- **LIARDET, Pierre-Yvan**
  **13790 Peynier (FR)**

(74) Mandataire: **Cabinet Beaumont
4, Place Robert Schuman
B.P. 1529
38025 Grenoble Cedex 1 (FR)**

(56) Documents cités:
**FR-A1- 2 875 355     GB-A- 2 399 904**

- **JOYE M ET AL: "THE MONTGOMERY POWERING LADDER", CRYPTOGRAPHIC HARDWARE AND EMBEDDED SYSTEMS. INTERNATIONALWORKSHOP, XX, XX, 13 août 2002 (2002-08-13), pages 291-302, XP001160513,**
- **CHRISTOPHE CLAVIER ET AL: "Horizontal Correlation Analysis on Exponentiation", INTERNATIONAL ASSOCIATION FOR CRYPTOLOGIC RESEARCH,, vol. 20101129:141334, 29 novembre 2010 (2010-11-29), pages 1-19, XP061004345,**
- **Benoit Feix ET AL: "Side-Channel Analysis on Blinded Regular Scalar Multiplications - Extended Version", proceedings of INDOCRYPT 2014, 1 janvier 2014 (2014-01-01), XP055378142, Extrait de l'Internet: URL:https://eprint.iacr.org/2014/191.pdf [extrait le 2017-06-02]**

EP 3 287 892 B1

**Description**

Domaine

La présente description concerne de façon générale les circuits électroniques et, plus particulièrement, les circuits exécutant des opérations d'exponentiation modulaire. La présente description concerne plus particulièrement la protection de tels calculs contre des attaques visant à découvrir des quantités manipulées par ces calculs.

Exposé de l'art antérieur

Dans de nombreuses applications, des circuits électroniques mettent en oeuvre des algorithmes de chiffrement, d'authentification, de calcul de signature, et plus généralement des algorithmes manipulant des données dites secrètes, c'est-à-dire dont on souhaite réserver l'accès à certains utilisateurs ou circuits. Parmi ces algorithmes, certains utilisent des opérations d'exponentiation modulaire, par exemple des algorithmes de type RSA.

De nombreuses méthodes, dites attaques, existent pour tenter de découvrir ou pirater des données secrètes manipulées par ces calculs. Parmi ces attaques, des attaques dites par canaux cachés, exploitent des informations indirectes telles que la consommation du circuit (attaques SPA, DPA), son rayonnement, etc. L'interprétation de ces informations renseigne le pirate sur la donnée secrète.

Dans les attaques par canaux cachés, on distingue notamment les attaques dites verticales, et les attaques dites horizontales. Les attaques verticales consistent à exploiter les variations d'une même quantité secrète sur plusieurs traces successives, par exemple de consommations, enregistrées en ayant fait différentes hypothèses sur la quantité secrète. Les attaques horizontales consistent à exploiter les différentes opérations d'une même trace et relatives aux quantités secrètes. Les contremesures qui sont généralement efficaces contre des attaques verticales par canaux cachés ne le sont généralement pas contre les attaques horizontales.

Il existe un besoin d'améliorer la protection des données manipulées par des algorithmes exécutant des exponentiations modulaires contre des attaques par canaux cachés.

Résumé

Un mode de réalisation pallie tout ou partie des inconvénients des procédés et circuits usuels de protection de données manipulées par des algorithmes contre des attaques par canaux cachés.

Un mode de réalisation propose un procédé de calcul d'une exponentiation modulaire par un circuit électronique qui pallie tout ou partie des inconvénients des procédés usuels.

Un mode de réalisation propose un procédé de calcul efficace contre des attaques horizontales.

Ainsi, un mode de réalisation prévoit un procédé de protection d'un calcul d'exponentiation modulaire sur un premier nombre et un exposant, modulo un premier modulo, exécuté par un circuit électronique utilisant un premier registre ou emplacement mémoire et un deuxième registre ou emplacement mémoire, comportant successivement, pour chaque bit de l'exposant :

un tirage d'un nombre aléatoire ;
une multiplication modulaire du contenu du premier registre ou emplacement mémoire par celui du deuxième registre ou emplacement mémoire, en plaçant le résultat dans l'un des premier et deuxième registres ou emplacements mémoire choisi en fonction de l'état du bit de l'exposant ;
un carré modulaire du contenu de l'un des premier et deuxième registres ou emplacements mémoire choisi en fonction de l'état de l'exposant, en plaçant le résultat dans ce registre ou emplacement mémoire choisi,
les opérations de multiplication et de carré étant effectuées modulo le produit du premier modulo par ledit nombre aléatoire.

Selon un mode de réalisation, le résultat du calcul d'exponentiation modulaire est contenu dans ledit premier registre ou emplacement mémoire.

Selon un mode de réalisation, le procédé comporte les étapes suivantes :

initialiser le premier registre ou emplacement mémoire à la valeur 1 ;
initialiser le deuxième registre ou emplacement mémoire à la valeur du premier nombre.

Un mode de réalisation prévoit un circuit électronique adapté à la mise en oeuvre du procédé ci-dessus.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un mode de réalisation d'un circuit électronique ;
la figure 2 représente, sous forme de blocs, les étapes d'un calcul par la méthode de carré-multiplication par l'échelle de Montgomery ; et
la figure 3 représente, sous forme de blocs, un mode de réalisation d'un procédé de protection d'un calcul d'exponentiation modulaire.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques. Par souci de clarté, seuls les éléments utiles à la compréhension des modes de réalisation décrits ont été représentés et seront détaillés. En particulier, les applications des calculs exécutés ou celles des circuits les exécutant n'ont pas été détaillées, les modes de réalisation décrits étant compatibles avec les applications usuelles.

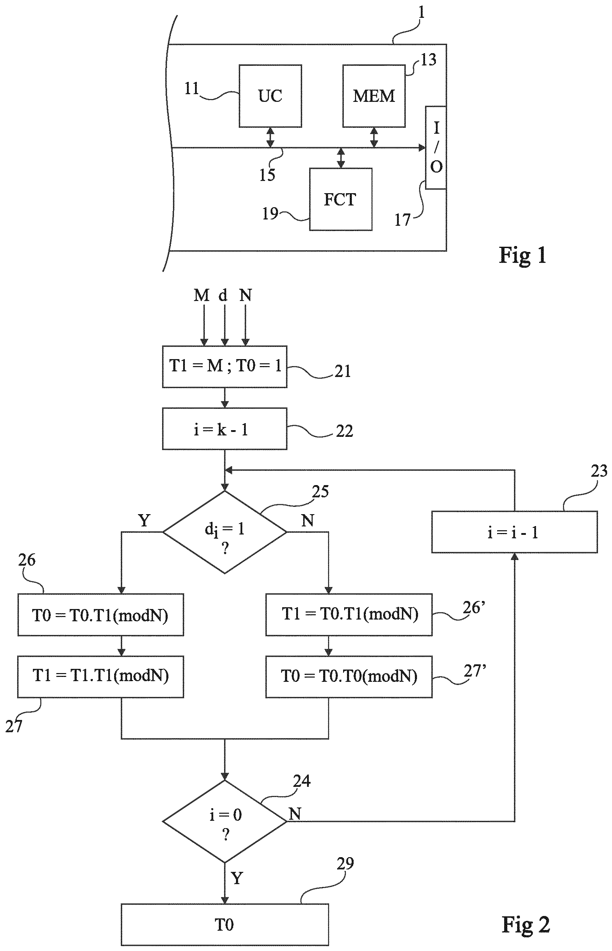

La figure 1 représente, de façon très schématique un circuit électronique 1 du type auquel s'appliquent les modes de réalisation qui vont être décrits.

Le circuit 1 comporte :

une entité de calcul 11 (UC), par exemple une machine d'états, un microprocesseur, un circuit logique programmable, etc. ;
une ou plusieurs zones 13 (MEM) de stockage volatile et/ou non volatile pour stocker tout ou partie des données et clés ;
un ou plusieurs bus 15 de données, d'adresses et/ou de commandes entre les différents éléments internes au circuit 1 et une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

Des opérations d'exponentiation modulaire se retrouvent dans de nombreux algorithmes de chiffrement parmi lesquels, par exemple, l'algorithme connu sous la dénomination RSA.

Une exponentiation modulaire consiste à calculer le résultat C de l'exponentiation d'un nombre M par un entier d (exposant) modulo N, c'est-à-dire appliquer la formule :

$$C = M^d \ (\text{mod } N).$$

Le plus souvent :

le nombre M représente le nombre (ou une information représentative du nombre) que l'on souhaite chiffrer, authentifier, signer, etc. ; et
l'exposant d et le modulo N (le couple (d, N)) représentent la clé (ou des informations représentatives de la clé) de chiffrement, d'authentification, de signature, etc.

Dans l'exemple d'application au chiffrement RSA, la clé de chiffrement est le couple (d, N) et la clé de déchiffrement est un couple (d', N), où N est le module de chiffrement et d' l'exposant de déchiffrement.

Le calcul de l'exponentiation modulaire par un circuit électronique (une machine d'états, un processeur exécutant le procédé sous forme de programme, un circuit logique programmable, etc.), par exemple le circuit 1, s'effectue le plus souvent en appliquant une méthode dite échelle de Montgomery (Montgomery Powering Ladder).

La figure 2 représente, sous forme de blocs, les étapes d'un calcul par la méthode de l'échelle de Montgomery.

Le calcul utilise au moins deux registres du circuit 1, ou deux emplacements mémoire, notés arbitrairement T0 et T1, sur lesquels vont être effectuées les opérations. On fera par la suite référence, pour simplifier, à des registres mais il peut à chaque fois également s'agir d'emplacements mémoire.

Le message, par exemple le nombre M, à soumettre à l'exponentiation modulaire est chargé dans le registre T1. L'exposant d est lu bit par bit au cours du calcul. On note di chaque bit de l'exposant d, où i désigne le rang allant de 0 à k-1, où k représente la taille de l'exposant d.

Par la suite, pour simplifier, on confondra les registres et leur contenu, c'est-à-dire qu'en faisant référence à des opérations sur les registres, on entend sur leurs contenus.

Dans une première étape (bloc 21, T1=M, T0=1), le registre T1 est donc chargé avec le nombre M et le registre T0 est initialisé à 1.

On entame alors un calcul en boucle sur les bits de l'exposant d. Par exemple, un compteur i est initialisé à k-1 (bloc 22, i=k-1) et est décrémenté de 1 (bloc 23, i=i-1) à chaque traitement d'un bit di de l'exposant tant que tous les bits n'ont pas été traités (bloc 24, i=0 ?).

A chaque itération, c'est-à-dire pour chaque bit di, on commence par tester la valeur du bit de l'exposant (bloc 25, di=1 ?).

Si le bit courant di vaut 1 (sortie Y du bloc 25), le contenu du registre T0 est multiplié, modulo N, par le contenu du registre T1 et le résultat est placé dans le registre T0 (bloc 26, T0=T0.T1 (mod N)), puis le contenu du registre T1 est élevé au carré, modulo N, et le résultat est placé dans le registre T1 (bloc 27, T1=T1.T1 (mod N)). Cela revient à effectuer l'opération de multiplication-carré, le produit des deux registres est mis dans le registre T0, puis le contenu du registre T1 est remplacé par son carré.

Si le bit courant di vaut 0 (sortie N du bloc 25), le contenu du registre T0 est multiplié, modulo N, par le contenu du registre T1 et le résultat est placé dans le registre T1 (bloc 26', T1=T0.T1 (mod N)), puis le contenu du registre T0 est élevé au carré, modulo N, et le résultat est placé dans le registre T0 (bloc 27', T0=T0.T0 (mod N)). Cela revient à effectuer l'opération de multiplication-carré, le produit des deux registres est mis dans le registre T1, puis le contenu du registre T0 est remplacé par son carré.

Tant que tous les bits de l'exposant d n'ont pas été traités (sortie N du bloc 24), on décrémente le compteur i (bloc 23) et on revient à l'étape 25. Une fois que tous les bits de l'exposant d ont été traités (sortie Y du bloc 24), le registre T0 contient le résultat de l'exponentiation modulaire (bloc 29, T0), c'est-à-dire la valeur $C = M^d \pmod N$.

Le calcul illustré par la figure 2 peut s'écrire également de la façon suivante :

T0 = 1 (étape 21)
T1 = M (étape 21)

Pour i=k-1 à 0 (étapes 22 à 27) :

$$b = 1-d_i$$

$$Tb = T0.T1 \pmod N$$

$$Td_i = Td_i.Td_i \pmod N$$

Fin de boucle (sortie Y du bloc 24)
Retourner T0 (étape 29).
Pour protéger le calcul contre des attaques exploitant une analyse par canaux cachés du type par analyse différentielle de la consommation (DPA ou Differential Power Analysis), on a déjà proposé d'introduire un nombre aléatoire dans le modulo N au début du calcul. Ainsi, on tire un nombre aléatoire r avant le calcul en boucle et les multiplications des étapes 26, 26', 27 et 27' sont en fait effectuées modulo rN.
Une telle solution est efficace sur les attaques verticales. Toutefois, ce nombre aléatoire est sans effet sur des attaques horizontales dans la mesure où elles n'exploitent qu'une seule trace, donc une seule exécution.

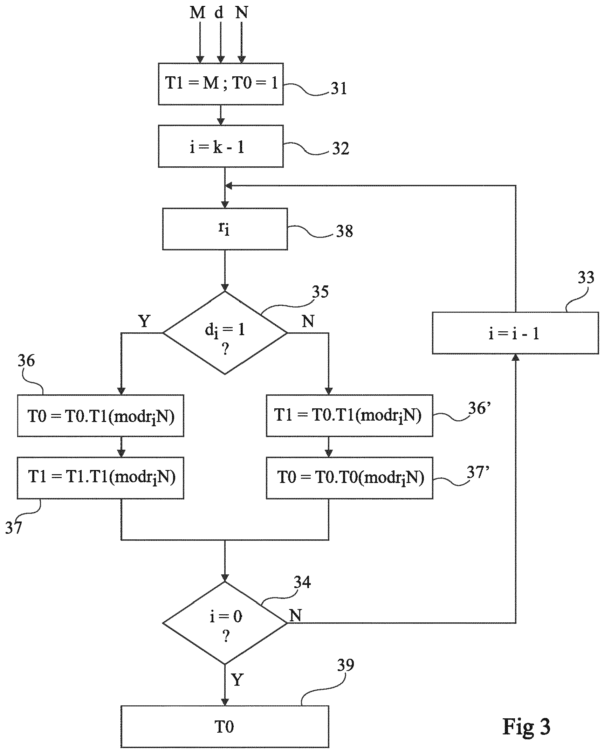

La figure 3 représente, sous forme de blocs, un mode de réalisation d'un procédé de protection d'un calcul d'exponentiation modulaire résistant à des attaques horizontales par canaux cachés.
Comme précédemment, l'objectif est de calculer la valeur $C = M^d \pmod N$ par la méthode de l'échelle de Montgomery.
Le calcul utilise toujours deux registres du circuit 1, notés arbitrairement T0 et T1 sur lesquels vont être effectuées les opérations. De même, le message, par exemple le nombre M, à soumettre à l'exponentiation modulaire, est chargé dans le registre T1. L'exposant d est chargé dans un autre registre ou réside dans la mémoire ($d_i$ représentant chaque bit de l'exposant d, où i désigne le rang allant de 0 à k-1).
Dans une première étape (bloc 31, T1=M, T0=1), le registre T1 est comme précédemment chargé avec le nombre M et le registre T0 est initialisé à 1.
On entame alors un calcul en boucle sur les bits de l'exposant d. Par exemple, un compteur i est initialisé à k-1 (bloc 32, i=k-1) et est décrémenté de 1 (bloc 33, i=i-1) à chaque traitement d'un bit di de l'exposant tant que tous les bits n'ont pas été traités (bloc 34, i=0 ?).
A chaque itération, c'est-à-dire pour chaque bit di, on tire (bloc 38, ri) un nombre aléatoire ri. Le nombre ri comporte un nombre de bits quelconque, c'est-à-dire choisi sans lien avec le modulo ou la taille des autres quantités manipulées. Puis, on teste la valeur du bit de l'exposant (bloc 35, di=1 ?).
Si le bit courant di vaut 1 (sortie Y du bloc 35), le contenu du registre T0 est multiplié, modulo riN, par le contenu du registre T1 et le résultat est placé dans le registre T0 (bloc 36, T0=T0.T1 (mod riN)), puis le contenu du registre T1 est élevé au carré, modulo riN, et le résultat est placé dans le registre T1 (bloc 37, T1=T1.T1 (mod riN)). Cela revient à effectuer l'opération de multiplication-carré, le produit des deux registres est mis dans le registre T0, puis le contenu du registre T1 est remplacé par son carré.
Si le bit courant di vaut 0 (sortie N du bloc 35), le contenu du registre T0 est multiplié, modulo riN, par le contenu du registre T1 et le résultat est placé dans le registre T1 (bloc 36', T1=T0.T1 (mod $r_iN$)), puis le contenu du registre T0 est élevé au carré, modulo riN, et le résultat est placé dans le registre T0 (bloc 37', T0=T0.T0 (mod riN)). Cela revient à effectuer l'opération de multiplication-carré, le produit des deux registres est mis dans le registre T1, puis le contenu du registre T0 est remplacé par son carré.
Tant que tous les bits de l'exposant d n'ont pas été traités (sortie N du bloc 34), on décrémente le compteur i et on revient à l'étape 38. Une fois que tous les bits de l'exposant d ont été traités (sortie Y du bloc 34), le registre T0 contient le résultat de l'exponentiation modulaire (bloc 39, T0), c'est-à-dire la valeur $C = M^d \pmod N$. En effet, l'introduction d'un modulo différent, à chaque itération ne change pas le résultat final une fois que celui-ci est réduit modulo N.
Le calcul illustré par la figure 3 peut s'écrire également de la façon suivante :

T0 = 1 (étape 31)
T1 = M (étape 31)

Pour i=k-1 à 0 (étapes 32 à 38) :
Tirer ri

$$b = 1-d_i$$

$$Tb = T0.T1 \pmod{r_iN}$$

$$Td_i = Td_i.Td_i \pmod{r_iN}$$

Fin de boucle (sortie Y du bloc 34)

Retourner T0 (mod N) (étape 39).

Un avantage qu'il y a à changer le nombre aléatoire ri à chaque itération de la boucle est que cet aléa masque différemment le calcul à chaque itération de cette boucle. Ainsi, l'analyse de la trace en cas d'attaque horizontale devient inexploitable.

Un autre avantage est que cette contremesure est également efficace en cas d'attaques verticales.

Divers modes de réalisation ont été décrits. Diverses variantes et modifications apparaîtront à l'homme de l'art. En particulier, la dénomination des registres est arbitraire et pourra être inversée. Enfin, la mise en oeuvre pratique des modes de réalisation qui ont été décrits est à la portée de l'homme du métier à partir des indications fonctionnelles données ci-dessus.

## Revendications

1. Procédé de protection d'un calcul d'exponentiation modulaire sur un premier nombre (M) et un exposant (d), modulo un premier modulo (N), exécuté par un circuit électronique (1) utilisant un premier registre ou emplacement mémoire (T0) et un deuxième registre ou emplacement mémoire (T1), comportant successivement, pour chaque bit de l'exposant (d) :

   un tirage d'un nombre aléatoire (ri) ;
   une multiplication modulaire (36, 36') du contenu du premier registre ou emplacement mémoire par celui du deuxième registre ou emplacement mémoire, en plaçant le résultat dans l'un des premier et deuxième registres ou emplacements mémoire choisi en fonction de l'état du bit de l'exposant ;
   un carré modulaire (37, 37') du contenu de l'un des premier et deuxième registres ou emplacements mémoire choisi en fonction de l'état de l'exposant, en plaçant le résultat dans ce registre ou emplacement mémoire choisi,
   les opérations de multiplication et de carré étant effectuées modulo le produit du premier modulo par ledit nombre aléatoire.

2. Procédé selon la revendication 1, dans lequel le résultat du calcul d'exponentiation modulaire est contenu dans ledit premier registre ou emplacement mémoire (T0).

3. Procédé selon la revendication 1 ou 2, comportant les étapes suivantes :

   initialiser (31) le premier registre ou emplacement mémoire (T0) à la valeur 1 ;
   initialiser (31) le deuxième registre ou emplacement mémoire (T1) à la valeur du premier nombre (M).

4. Circuit électronique (1) adapté à la mise en oeuvre du procédé selon l'une quelconque des revendications 1 à 3.

## Patentansprüche

1. Verfahren zum Schutz einer modularen Potenzierungsberechnung an einer ersten Zahl (M) und einem Exponenten (d), Modulo ein erster Modulo (N), ausgeführt von einer elektronischen Schaltung (1) unter Verwendung eines ersten Registers oder Speicherorts (T0) und eines zweites Registers oder Speicherorts (T1), die nacheinander für jedes Bit des Exponenten (d) Folgendes aufweisen:

   Zeichnen einer Zufallszahl (ri);
   Durchführen einer modularen Multiplikation (36, 36') des Inhalts des ersten Registers oder Speicherortes mit der des zweiten Registers oder Speicherortes und Platzieren des Ergebnisses in eines der ersten und zweiten Register oder Speicherorte, die gemäß dem Zustand des Bits des Exponenten ausgewählt werden;
   Durchführen einer modularen Quadrierung (37, 37') des Inhalts eines der ersten und zweiten Register oder des Speicherortes, die gemäß dem Zustand des Exponenten ausgewählt werden, und Platzieren des Ergebnisses in dieses ausgewählte Register oder den Speicherort,
   die Multiplikations- und Quadrierungsoperationen werden Modulo zum Produkt des ersten Modulo durch die Zufallszahl durchgeführt.

2. Verfahren nach Anspruch 1, wobei das Ergebnis der modularen Potenzierungsberechnung in dem ersten Register oder Speicherort (T0) enthalten ist.

3. Verfahren nach Anspruch 1 oder 2, das die folgenden Schritte aufweist:

   Initialisieren (31) des ersten Registers oder Speicherortes (T0) auf den Wert 1;
   Initialisieren (31) des zweiten Registers oder Speicherortes (T1) auf den Wert der ersten Zahl (M).

4. Elektronische Schaltung (1), die geeignet ist zum Implementieren des Verfahrens nach einem der Ansprüche 1 bis 3.

## Claims

1. A method of protecting a modular exponentiation calculation on a first number (M) and an exponent (d), modulo a first modulo (N), executed by an electronic circuit (1) using a first register or memory location (T0) and a second register or memory location (T1), successively comprising, for each bit of the exponent (d) :

drawing a random number ($r_i$);
performing a modular multiplication (36, 36') of the content of the first register or memory location by that of the second register or memory location, and placing the result in one of the first and second registers or memory locations selected according to the state of the bit of the exponent;
performing a modular squaring (37, 37') of the content of one of the first and second registers or memory locations selected according to the state of the exponent, and placing the result in this selected register or memory location,
the multiplication and squaring operations being performed modulo the product of the first modulo by said random number.

2. The method of claim 1, wherein the result of the modular exponentiation calculation is contained in said first register or memory location (T0).

3. The method of claim 1 or 2, comprising the steps of:

initializing (31) the first register or memory location (T0) to value 1;
initializing (31) the second register or memory location (T1) to the value of the first number (M).

4. An electronic circuit (1) adapted to implement the method of any of claims 1 to 3.

Fig 1

Fig 2

M   d   N

$$T1 = M \; ; \; T0 = 1$$ — 31

$$i = k - 1$$ — 32

$$r_i$$ — 38

35

Y   $$d_i = 1$$ ?   N

36

$$T0 = T0.T1(mod\, r_i N)$$

$$T1 = T0.T1(mod\, r_i N)$$ — 36'

$$T1 = T1.T1(mod\, r_i N)$$

$$T0 = T0.T0(mod\, r_i N)$$ — 37'

37

33

$$i = i - 1$$

34

$$i = 0$$ ?   N

Y

$$T0$$ — 39

**Fig 3**